# EUROPEAN PATENT APPLICATION

(11) **EP 2 279 983 A2**
(43) Date of publication of application: **02.02.2011**
(21) Application number: 10165986.0
(22) Date of filing: 15.06.2010
(51) Int. Cl.: C03B 33/07, C03B 33/10

(54) **Method and Apparatus for Processing Brittle Material Substrate**

(30) Priority: 31.07.2009 JP 2009179852
(71) Applicant: Mitsuboshi Diamond Industrial Co., Ltd., Suita-city, Osaka 564-0044 (JP)
(72) Inventor: Maekawa, Kazuya, Suita-city Osaka 564-0044 (JP); Sakaguchi, Ryota, Suita-city Osaka 564-0044 (JP)
(74) Representative: TBK-Patent

(57) **Abstract**

[Object] To provide a method and an apparatus for scribing a brittle material substrate where a scribing trench can be effectively created both in the resin layer and the brittle material plate from the same side.

[Means for Achieving Object] A cut trench 22 is created in a resin layer 21 from the top by means of a fixed blade 1 or a laser beam, and then the brittle material plate is scribed along the above described cut trench 22 with a cutter wheel 2 having inclining surfaces with two angles on the two sides of the blade, and thus, a scribing trench 23 is created in the brittle material plate.

The above described cutter wheel 2 is provided with a blade 2a for scribing a brittle material having a large angle α between the ridge lines in the edge portion and second inclining surfaces 2c which continue from the first inclining surfaces 2b on the left and right of the blade 2a for scribing a brittle material so that the angle β at which the virtual lines along the left and right second inclining surfaces cross is smaller than the angle α between the ridge lines in the above described edge portion, and thus, the two sides of the blade have inclining surfaces with two angles in the structure.

## Description

### [Technical Field]

The present invention relates to a method and an apparatus for processing a brittle material substrate, such as touch panels and glass with a protective film which are glass substrates, having a resin layer, for example, a film, on the surface of a brittle material (glass, ceramics and semiconductor materials).

### [Background Art]

As one conventional method for dividing a glass substrate, a method is used for dividing a glass substrate according to which a glass substrate is fixed on a table using a vacuum suction mechanism, a scribing trench is created on one side of the glass substrate by means of a cutter wheel for glass with a large angle between the ridge lines at the edge of a blade, and after that, pressure is applied along the scribing trench using a pressure means, such as a break bar or a roller, so that a vertical crack extends.

Currently, glass substrates where a resin layer, such as a film, is formed on the surface of a glass plate on one side, for example, touch panels, are widely known. When such a glass substrate on which a resin layer is formed is scribed and divided, a problem arises with using the above described scribing method because properties are different between resins and glass. In the case where a scribing trench is created directly in a glass plate from the side with a resin layer using cutter wheel for glass with a large angle between the ridge lines at the edge of the blade, for example, the resin layer cannot be divided or even if it could, the portion of the resin layer that is scribed is torn irregularly or the periphery of the scribing trench is broken in such a manner as to create dust of microscopic particles, which may cause the quality of the processed surface of the product to deteriorate.

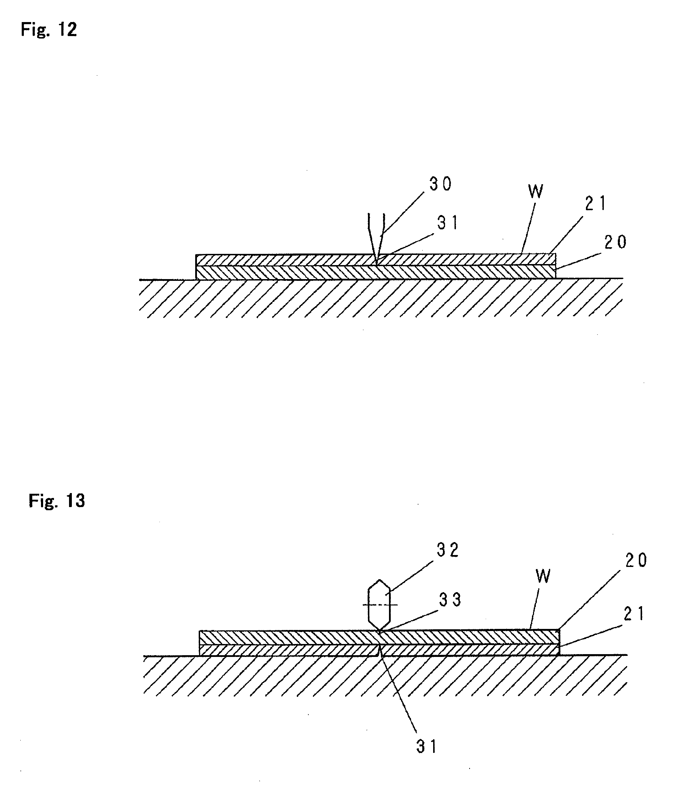

Therefore, glass substrates are processed in accordance with the method shown below according to the prior art. As shown in Fig 12, when a glass substrate W where a resin layer 21 is formed on one side of a glass plate 20 is divided, first, a cut trench 31 is created in the resin layer 21 by running a sharp fixed blade 30 with a small angle between the ridge lines at the edge along a line, which is where the substrate is to be scribed, as it is pressed against the substrate. The cutting is adjusted such that this cut trench 31 is created only in the resin layer and not in the glass plate. The resin layer is cut with a sharp fixed blade 30 with a small angle between the ridge lines because the resin layer cannot be cut with a blade with a large angle between the ridge lines.
Next, as shown in Fig 13, the glass substrate W is turned over and a scribing trench 33 is created in the glass plate 20 along the previously created cut trench 31 on the opposite side by rolling a cutter wheel 32 for glass with a large angle between the ridge lines at the edge over it. The glass substrate is scribed with a cutter wheel 32 with a large angle between the ridge lines at the edge because a scribing trench cannot be created with an edge having a small angle between the ridge lines and the glass substrate suddenly breaks when an excessive load is applied, even if it is by a small margin.
As described above, the resin layer is cut with a fixed blade on one side, the substrate is turned over, and the glass is scribed on the other side with a cutter wheel, and thus, a dividing process is carried out.

### [Summary of the Invention]

### [Problem to be Solved by the Invention]

According to the above described conventional method, however, a process for turning over a glass substrate is necessary, and it takes that much longer for the time required for the process, including the time for positioning. In addition, such a problem arises that the apparatus becomes complex and large scale at a higher cost because of additional costs for accessory equipment, such as the mechanism for turning over a substrate. Furthermore, in the case where the resin layer forms a touch panel, such a problem arises that the resin layer makes contact with the table when the substrate is turned over with the resin layer facing downwards, and the weight of the glass substrate itself is applied to the resin layer, which is thus in such a state as to be easily damaged.

Therefore, an object of the present invention is to provide a method and an apparatus for processing a glass substrate where a resin layer is formed on one side, according to which a cut trench and a scribing trench can both be effectively created in the resin layer and the glass plate from the same side without turning over the glass substrate when a dividing process is carried out on the glass substrate.

### [Means for Solving Problem]

In order to achieve the above described object, the present invention provides the following technical means. That is to say, the processing method according to the present invention is a method for processing a glass substrate where a resin layer is formed on one side, and first, a cut trench is created in the resin layer with a resin dividing means from the top on the resin layer side. The resin dividing means is not particularly limited as long as it can divide a resin layer, and it is preferable to use a fixed blade for mechanically dividing a resin layer or a laser for thermally dividing a resin layer. Subsequently, a cutter wheel having a structure as described below is used so that a scribing trench is created in the glass plate by rolling this cutter wheel along the above described cut trench over the top of the resin layer side as it is pressed against the glass plate. That is to say, the cutter wheel for scribing a glass plate has a blade for scribing glass with an angle α between the ridge lines in the edge portion of the blade and second inclining surfaces that continue from the first inclining surfaces on the left and right of the blade for scribing glass so that the angle β, at which the imaginary lines along the second inclining surfaces on the left and right cross, is smaller than the above described angle α between the ridge lines in the edge portion, and thus, the cutter wheel has inclining surfaces with two angles.

The angle α between the ridge lines at the edge of the above described cutter wheel may be between 80 degrees and 160 degrees (usually between 90 degrees and 145 degrees, particularly between 90 degrees and 130 degrees), and the angle β at which the imaginary lines along the second inclining surfaces cross may be between 10 degrees and 70 degrees (usually between 15 degrees and 55 degrees, particularly between 25 degrees and 40 degrees).

In accordance with the scribing method according to the present invention, a cut trench is created in the resin layer with a resin dividing means, such as a laser beam or a fixed blade, and subsequently, the substrate is scribed on the side on which the resin layer is formed with a cutter wheel having inclining surfaces with two angles. The cutter wheel having inclining surfaces with two angles is used because of the following reasons.
In general, cutter wheels for scribing a brittle material, such as glass, have such a structure that a scribing trench is created by rolling it as it is pressed against glass, and therefore, the angle α between the ridge lines at the edge is large. In the case where the angle α between the ridge lines at the edge of the cutter wheel is small, no scribing trench can be created when the load is small, while the glass substrate suddenly breaks without a scribing trench being created when the load is great.
Meanwhile, in the case where a cutter wheel for scribing a brittle material with a large angle α between the ridge lines at the blade is rolled over the cut trench created in the resin layer, the edge surface partly makes contact with the resin layer, and the part of the resin layer that makes contact with the cutter wheel is irregularly torn away.
Therefore, a cutter wheel is provided with inclining surfaces with two angles so that the portion of the cutter wheel that enters into the resin layer is thin, thus preventing the second inclining surfaces from making contact with the resin layer when the brittle material substrate is scribed with the edge surfaces (first inclining surfaces) having a large angle α between the ridge lines at the edge, and as a result, the edge portions of the cut trench in the resin layer can be prevented from being broken or torn away.

### [Effects of the Invention]

According to the present invention, the brittle material substrate can be scribed along the cut trench over the top on the resin layer side with a cutter wheel having the above described inclining surfaces with two angles, and thus, a scribing trench can be created in the brittle material substrate from the same side without turning over the brittle material substrate. As a result, the processing time can be greatly reduced.
The present invention is particularly effective in the case where the width of the cut trench created in the resin layer is in such a range as to be 200 µm or less, and particularly 100 µm or less (usually 20 µm or greater), for example.

In the above described invention, the fixed blade or the laser beam illuminating optical system for creating a cut trench as described above and the cutter wheel for creating a scribing trench in a brittle material plate may be aligned along the same straight line so that the creation of a cut trench in the resin layer and the creation of a scribing trench in the brittle material plate can be continuously carried out as one operation. As a result, the processing time can further be reduced.

In the above described invention, the suction apparatus for sucking dust and particles and a pressing roller for flattening the surface may be aligned along the same straight line subsequent to the cutter wheel so that the creation of a cut trench in the resin layer, the creation of a scribing trench in the brittle material plate, the suction of dust and particles and the flattening of the surface can be carried out in sequence as one operation.
As a result, in the case where there are dust, particles and burrs in the scribed portion, the dust and particles are sucked and removed, and at the same time, the burrs disappear when the surface is pressed and flattened so that the processed product can be high quality. In addition, these tasks can be achieved through one operation, and therefore, an increase in the processing efficiency can be achieved.

### [Brief Description of the Drawings]

Fig 1 is a perspective diagram showing an example of a substrate processing apparatus used for the processing method according to the present invention;
Fig 2 is a perspective diagram showing an attachment base 5 in the above described processing apparatus;
Fig 3 is a side diagram showing the above described attachment base 5;
Fig 4 is a cross sectional diagram showing a fixed blade 1 attached to the above described attachment base 5;
Fig 5 is a cross sectional diagram showing a cutter wheel 2 attached to the above described attachment base 5;
Fig 6 is a cross sectional diagram showing an enlargement of the blade portion of the above described cutter wheel 2;
Fig 7 is a side diagram showing another example of the attachment base 5 for the processing apparatus according to the present invention;
Fig 8 is a diagram illustrating the first step of the scribing method according to the present invention;
Fig 9 is a diagram illustrating the second step of the scribing method according to the present invention;
Fig 10 is a diagram illustrating the third step of the scribing method according to the present invention;
Fig 11 is a diagram illustrating the fourth step of the scribing method according to the present invention;
Fig 12 is a diagram illustrating the first step of a conventional scribing method; and
Fig 13 is a diagram illustrating the second step of the conventional scribing method.

### [Best Mode for Carrying Out the Invention]

In the following, the processing method according to the present invention is described in detail in reference to the drawings showing the embodiments thereof.

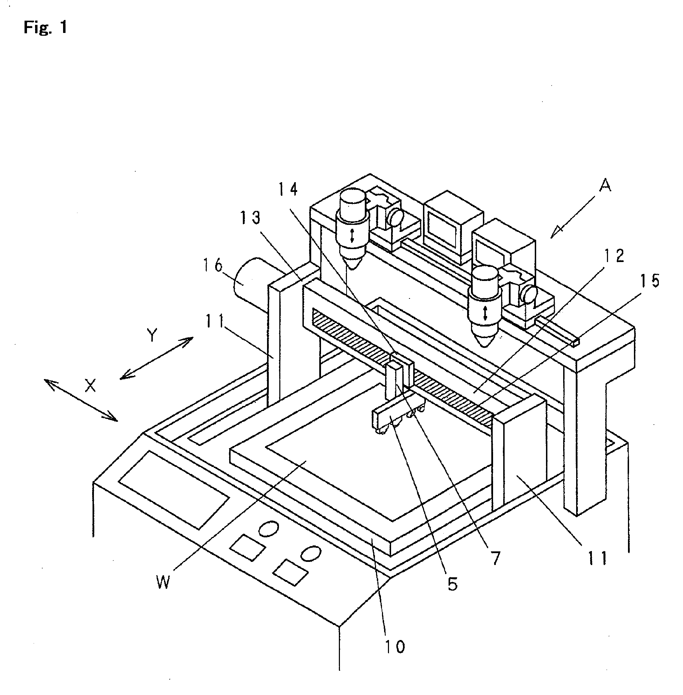

Fig 1 is a perspective diagram showing an embodiment of a processing apparatus A that is used for the processing method according to the present invention. The processing apparatus A is provided with a table 10 that can be moved in approximately the horizontal direction (Y direction) and can rotate in a horizontal plane. The table 10 is provided with a vacuum suction mechanism for holding a glass substrate W (not shown).

A bridge 13 that is formed of supports 11, 11 on the two sides of the table 10 and a guide bar 12 extending in the X direction is provided over the table 10 and can move in the Y direction by means of a movement mechanism, not shown. A slider 14 is attached so as to be movable along the guide 15 formed on the guide bar 12 and moves in the X direction as the motor 16 rotates. An attachment base 5 for holding the below described fixed blade 1 or cutter wheel 2 is attached to the slider 14 via a stay 7 that can move upwards and downwards.

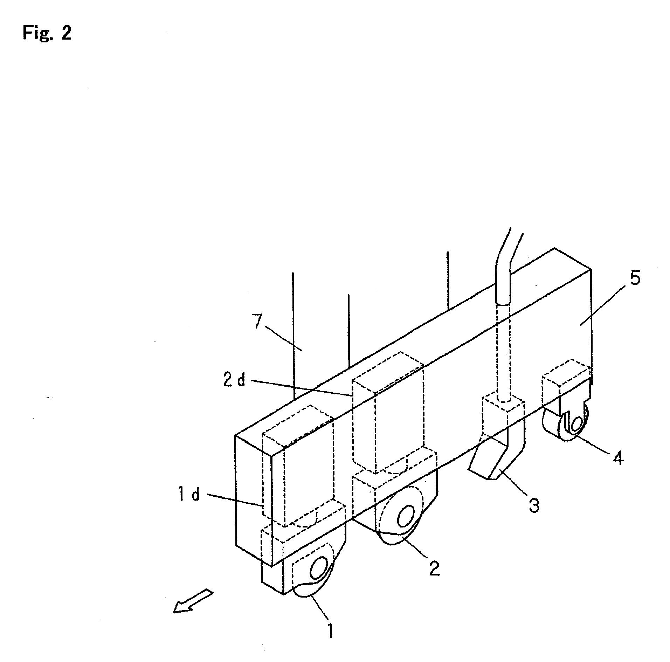

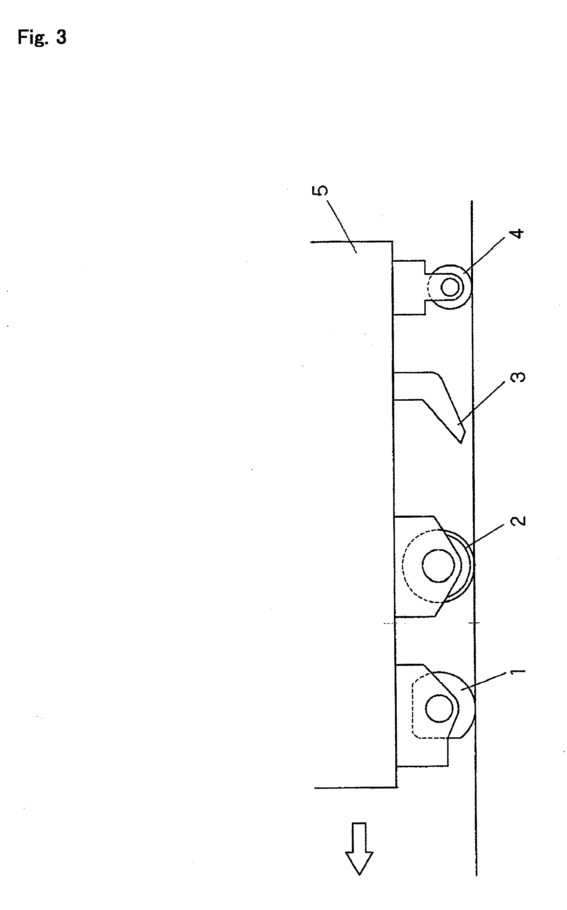

As shown in Figs 2 and 3, a fixed blade 1, a cutter wheel 2, a suction apparatus 3 for removing dust and particles and a pressing roller 4 are attached to the attachment base 5 in such a state that they are aligned along a straight line with the fixed blade 1 at the forefront.

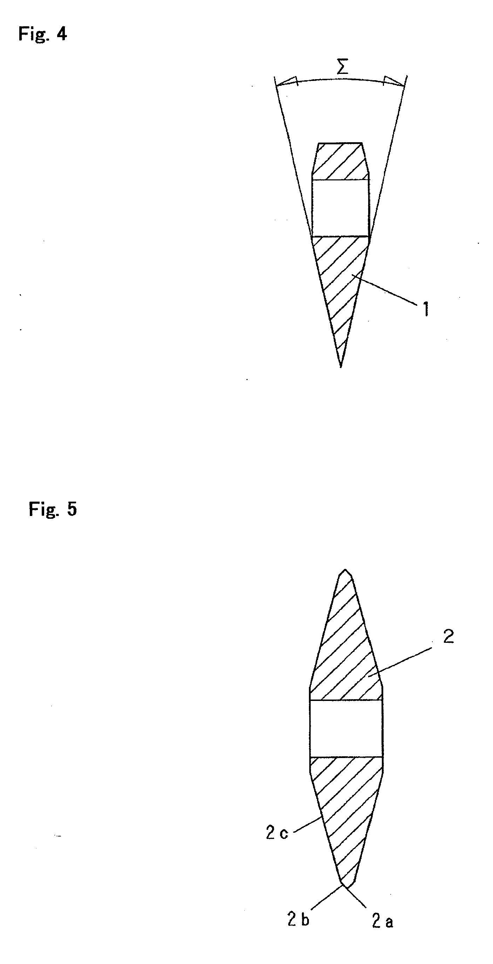

Fig 4 is a cross sectional diagram showing the fixed blade 1. The fixed blade 1 is made of a hard material, such as sintered diamond or carbide, and formed so as to have a sharp edge with a small angle Σ between the ridge lines at the edge. It is preferable for this angle Σ between the ridge lines at the edge to be in a range between 25 degrees and 40 degrees, and it is particularly preferable for it to be 30 degrees. In addition, the position of the fixed blade 1 can be microscopically adjusted upwards and downwards by means of an upward and downward adjusting mechanism 1d.

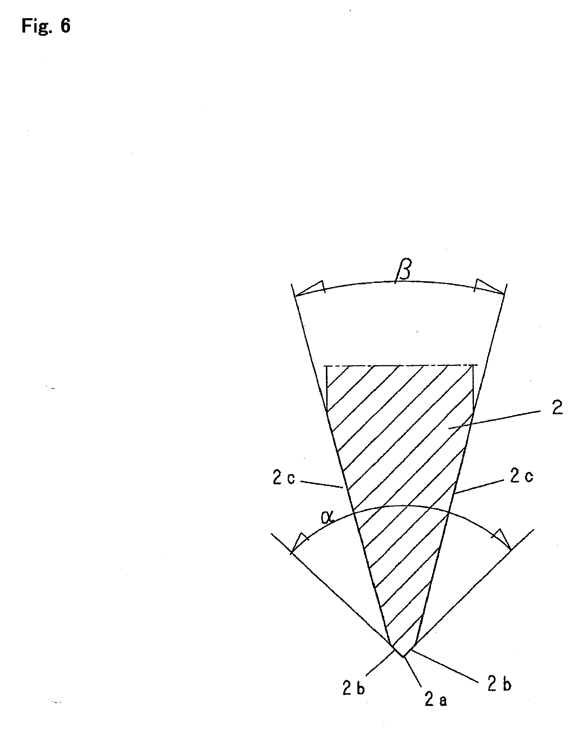

Fig 5 is a cross sectional diagram showing the cutter wheel, and Fig 6 is a diagram showing an enlargement of a portion thereof. The cutter wheel 2 is made of a hard material, such as sintered diamond or carbide, like the fixed blade 1. In addition, a blade 2a for scribing glass with a large angle α between the ridge lines is formed in the edge portion of this cutter wheel 2, and there are second inclining surfaces 2c which continue from the first inclining surface 2b on the left and right of the blade 2a for scribing glass. The angle β at which the imaginary straight line along the second inclining surfaces 2c, 2c on the left and right cross is smaller than the angle α between the ridge lines at the edge as described above, and as a result, the two sides, left and right, of the blade are provided with inclining surfaces with two angles.
It is preferable for the above described angle α between the ridge lines at the edge 2a to be between 80 degrees and 160 degrees, it is more preferable for it to be between 90 degrees and 145 degrees, and it is most preferable for it to be between 90 degrees and 130 degrees, while it is preferable for the angle β at which the imaginary straight lines along the second inclining surfaces cross to be between 10 degrees and 70 degrees, it is more preferable for it to be between 15 degrees and 55 degrees, it is even more preferable for it to be between 25 degrees and 40 degrees, and it is most preferable for it to be approximately 30 degrees. In addition, the position of the cutter wheel 2 can be microscopically adjusted upwards and downwards by means of an upward and downward adjusting mechanism 2d (see Fig 2) like the fixed blade 1.

Next, a processing operation using the above described processing apparatus A is described.

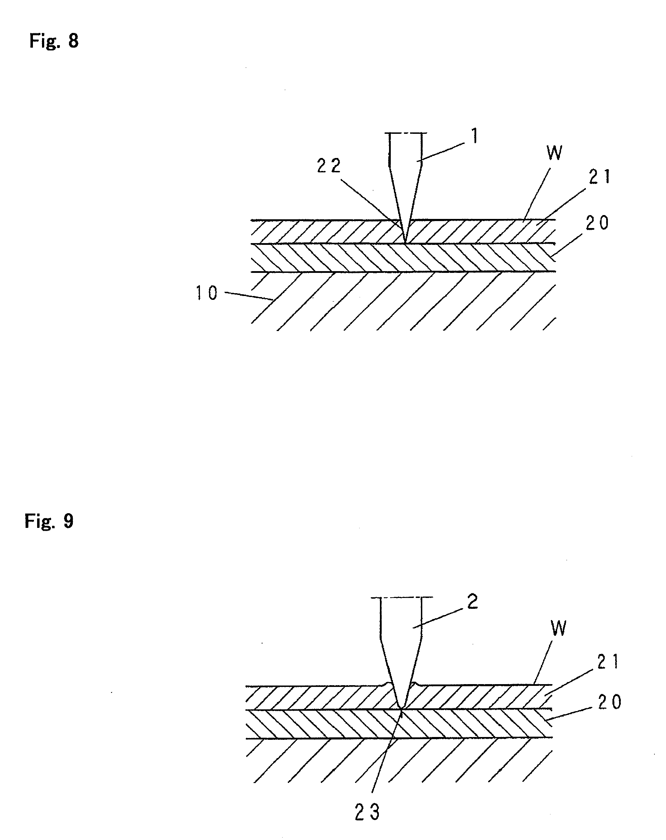

Figs 8 to 11 are diagrams showing the procedure when a glass substrate on which a resin layer is formed is divided. The glass substrate W that is to be scribed according to the present invention is a substrate for a touch panel or the like where a thin resin layer 21 is formed on one side of a glass plate 20. This glass substrate W is placed and fixed on a table 10 so that the resin layer 21 faces upwards as shown in Fig 8. After that, the attachment base 5 is lowered so that the fixed blade 1 and the cutter wheel 2 become of such a state as to be positioned for scribing, and the attachment base 5 is moved with the fixed blade 1 at the front while being pressed against the glass substrate W.

As a result of this movement, first, the sharp fixed blade 1 creates a cut trench 22 in the resin layer 21 as shown in Fig 8. At this time, the positioning of the system is set so that the edge of the fixed blade 1 does not hit the glass plate 20. As a result, only the resin layer 21 is processed with the sharp fixed blade 1, and a precisely cut trench 22 is created.

Next, as shown in Fig 9, the following cutter wheel 2 rolls over the glass plate 20 along the cut trench 22 while being pressed, and thus, a scribing trench 23 is created in the glass plate 20. At this time, the angle α between the ridge lines at the edge of the cutter wheel 2 is large enough for scribing glass, and therefore, the scribing trench 23 can be effectively created on the glass plate 20. In addition, the angle β between the second inclining surfaces 2c which exclude this edge 2a portion is small so that the edge portion of the cutter wheel 2 that engages with this cut trench 22 is thin. As a result, the effects of the cutter wheel 2 forcefully pressing down into and spreading the cut trench 22 can be kept small so that periphery portion of the cut trench 22 can be prevented from breaking or being torn.

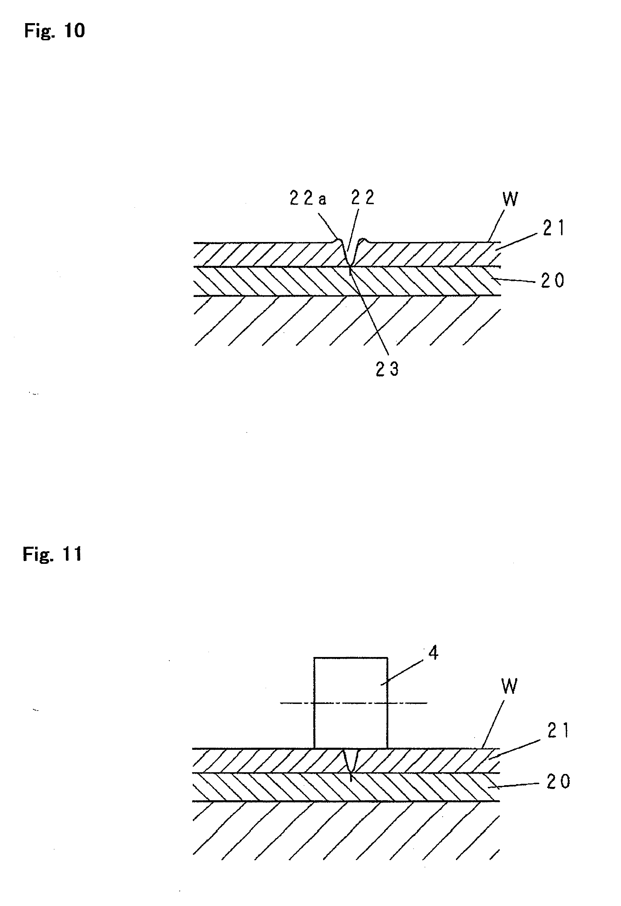

After that, the following suction apparatus 3 sucks and removes dust and microscopic particles resulting from the scribing of the glass plate 20, and then, the following pressing roller 4 flattens and precisely presses down the burrs 22a which slightly rise from the edge portions of the cut trench 22 (see Figs 10 and 11). Thus, a high quality product can be provided.

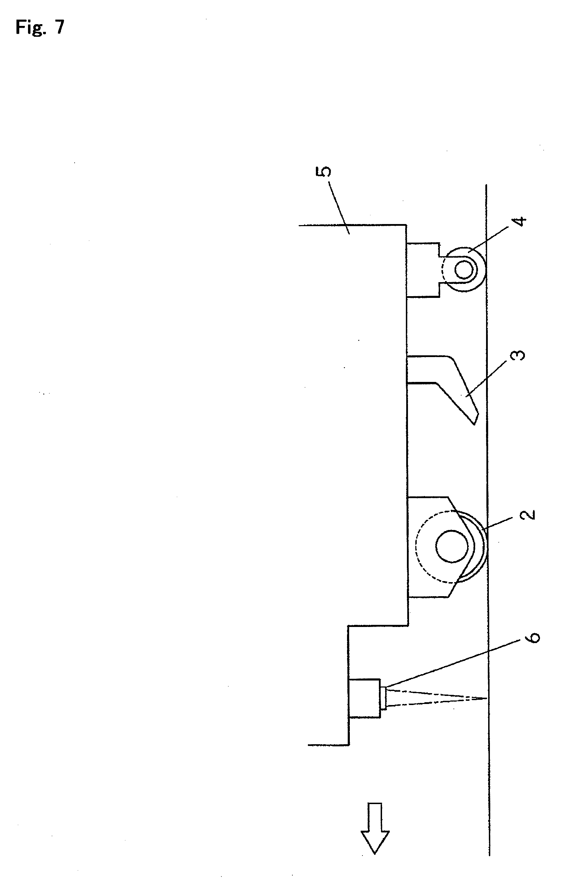

Though in the above described embodiment a fixed blade 1 is used to create a cut trench 22 in the resin layer 21 on a glass plate W, a laser beam illuminating optical system 6 may be attached to the attachment base 5 as shown in Fig 7 instead of the fixed blade 1 so that the cut trench 22 is created by means of a laser beam (laser abrasion process).

In addition, in the present invention it is possible to omit either or both the suction apparatus 3 and/or the pressing roller 4 which are provided so as to follow the cutter wheel 2 depending on the material quality of the glass substrate W to be processed.

Though the typical embodiments of the present invention are described above, the present invention is not necessarily limited to the above described embodiments. For example, though the attachment base 5 is moved relative to the glass substrate W in the above described embodiments, the glass substrate W may be moved with the attachment base 5 being fixed. In addition, it is possible to change or modify the present invention as long as the invention achieves its objects and the scope of the claim is not deviated from.
Furthermore, though a procedure for dividing a glass substrate on which a resin layer is formed is described above as an example, the present invention is appropriate for a brittle material substrate on which a resin layer is formed (for example, a ceramic substrate or a semiconductor material substrate) other than glass substrates on which a resin layer is formed.

### [Industrial Applicability]

The dividing method according to the present invention can be used to carry out a dividing process on a brittle material substrate where a resin layer is formed on the surface of a brittle material, for example, a glass substrate such as a touch panel, where a thin resin layer is formed on one side of a glass plate.

### [Explanation of Symbols]

- 1: fixed blade
- 2: cutter wheel
- 2a: blade for scribing glass in cutter wheel
- 2b: first inclining surfaces
- 2c: second inclining surfaces
- 3: suction apparatus
- 4: pressing roller
- 5: attachment base
- 6: laser beam illuminating optical system
- 20: glass plate in glass substrate
- 21: resin layer in glass substrate
- 22: cut trench
- 23: scribing trench
- W: glass substrate
- α: angle between ridge lines at edge of cutter wheel
- β: angle between second inclining surfaces of cutter wheel
- Σ: angle between ridge lines at edge of fixed blade

[Object] To provide a method and an apparatus for scribing a brittle material substrate where a scribing trench can be effectively created both in the resin layer and the brittle material plate from the same side.

[Means for Achieving Object] A cut trench 22 is created in a resin layer 21 from the top by means of a fixed blade 1 or a laser beam, and then the brittle material plate is scribed along the above described cut trench 22 with a cutter wheel 2 having inclining surfaces with two angles on the two sides of the blade, and thus, a scribing trench 23 is created in the brittle material plate.

The above described cutter wheel 2 is provided with a blade 2a for scribing a brittle material having a large angle α between the ridge lines in the edge portion and second inclining surfaces 2c which continue from the first inclining surfaces 2b on the left and right of the blade 2a for scribing a brittle material so that the angle β at which the virtual lines along the left and right second inclining surfaces cross is smaller than the angle α between the ridge lines in the above described edge portion, and thus, the two sides of the blade have inclining surfaces with two angles in the structure.

## Claims

1. A method for processing a brittle material substrate where a resin layer is formed on one side of a brittle material plate, comprising the steps of:
creating a cut trench in the resin layer from the top using a resin dividing means; and
using a cutter wheel having such a structure that inclining surfaces with two angles are provided with a blade for scribing a brittle material having an angle α between ridge lines in the edge portion of the blade and second inclining surfaces which continue from the first inclining surfaces on the left and right of the blade for scribing a brittle material so that the angle β at which virtual straight lines along the left and right second inclining surfaces cross is smaller than the angle α between ridge lines in said edge portion, thus creating a scribing trench in the brittle material plate by rolling this cutter wheel over the brittle material plate from the top of said resin layer along said cut trench while pressing this cutter wheel against the brittle material substrate.

2. The method for processing a brittle material substrate according to Claim 1, wherein said resin dividing means allows a fixed blade to slide so that said cut trench is created in the resin layer.

3. The method for processing a brittle material substrate according to Claim 1, wherein said resin dividing means illuminates the brittle material substrate with a laser beam so that said cut trench is created in the resin layer.

4. The method for processing a brittle material substrate according to either Claim 2 or 3, wherein a fixed blade or a laser beam illuminating optical system for creating said cut trench and a cutter wheel for creating a scribing trench in a brittle material plate are aligned along the same straight line so that the creation of a cut trench in the resin layer and the creation of a scribing trench in a brittle material plate can be carried out in sequence during one operation.

5. The method for processing a brittle material substrate according to Claim 4, wherein a suction apparatus for sucking dust and particles and a pressing roller for flattening the surface are aligned along the same line following said cutter wheel so that the creation of a cut trench in a resin layer, the creation of a scribing trench in the brittle material plate, the suction of dust and particles, and the flattening of the surface can be carried out in sequence during one operation.

6. The method for processing a brittle material substrate according to any of Claims 1 to 5, wherein the angle α between the ridge lines in the blade edge portion of said cutter wheel is 80 degrees to 160 degrees and the angle β at which the virtual straight lines along the second inclining surfaces cross is 10 degrees to 70 degrees.

7. An apparatus for processing a brittle material substrate where a resin layer is formed on one side, comprising:
a fixed blade or a laser beam illuminating optical system provided on the side of and above said resin layer for creating a cut trench in said resin layer; and
a cutter wheel provided along the same straight line as said fixed blade or laser beam illuminating optical system for creating a scribing trench in the brittle material plate when being rolled over the resin layer along the cut trench, **characterized in that**
said cutter wheel is provided with a blade for scribing a brittle material having an angle α between the ridge lines in the blade edge portion and second inclining surfaces which continue from the first inclining surfaces on the left and right of said blade for scribing a brittle material so that the angle β at which virtual lines along the left and right second inclining surfaces cross is smaller than the angle α between the ridge lines in said blade edge portion, and thus, the two surfaces on the left and right of the blade are inclining surfaces with two angles.

8. The apparatus for processing a brittle material substrate according to Claim 7, further comprising a suction apparatus for sucking dust and particles resulting from the creation of a cut trench and a scribing trench and a pressing roller for flattening the surface which includes said scribing trench, wherein the fixed blade or the laser beam illuminating optical system, the cutter wheel, the suction apparatus and the pressing roller are aligned in this sequence along the same straight line with the fixed blade or the laser beam illuminating optical system at the front.

9. The apparatus for processing a brittle material substrate according to Claim 7 or 8, wherein the angle α between the ridge lines in the blade edge portion of said cutter wheel is 80 degrees to 160 degrees and the angle β at which the virtual straight lines along the second inclining surfaces cross is 10 degrees to 70 degrees.
